# DEMANDE DE BREVET EUROPEEN

(11) **EP 1 256 733 A1**
(43) Date de publication de la demande: **13.11.2002**
(21) Numéro de dépôt: 02291106.9
(22) Date de dépôt: 02.05.2002
(51) Int. Cl.: F16C 29/04, F16C 29/00, B27B 5/22, B23Q 1/26, B23Q 1/58

(54) **Rail de guidage pour banc de support coulissant et machine outil le comportant**

(30) Priorité: 09.05.2001 FR 0106135
(71) Demandeur: Lurem Machines A Bois, 61700 Domfront (FR)
(72) Inventeur: Chesse, Jean, 61350 Saint Mrs d'Egrenne France (FR)
(74) Mandataire: Blot, Philippe Robert Emile

(57) **Abrégé**

Le rail de guidage (22) pour banc de support (20) coulissant d'une machine outil (10), comporte :
- une structure porteuse (50) déformable comportant au moins deux parties (62, 70) dont les positions relatives sont ajustables ;
- deux voies de roulement (54) pour des organes de roulement (48) du banc de support coulissant (20) ;
- au moins un tirant engagé entre deux parties (62, 70) de la structure porteuse pour l'ajustement de leurs positions relatives.

Il comporte deux profilés rigides (52) délimitant chacun une voie de roulement (54) La structure porteuse (50) comporte des tôles métalliques mécano-soudées auxquelles sont soudés les deux profilés rigides (52). Le ou chaque tirant (60) est engagé entre deux parties (62, 70) de la structure porteuse suivant un agencement adapté pour assurer un ajustement des positions relatives des deux profilés rigides (52) l'un par rapport à l'autre,

## Description

La présente invention concerne un rail de guidage pour un banc de support coulissant d'une machine outil, du type comportant :
- une structure porteuse déformable comportant au moins deux parties dont les positions relatives sont ajustables ;
- deux voies de roulement pour des organes de roulement du banc de support coulissant ;
- au moins un tirant engagé entre deux parties de la structure porteuse pour l'ajustement de leurs positions relatives.

Les machines outils de travail du bois comportent généralement un plateau supérieur pour l'appui de la pièce de bois à travailler. Une lame de scie ou un outil de moulurage, de toupillage ou de mortaisage fait saillie par rapport à ce plateau de support.

Afin de réduire la taille de la machine, tout en permettant le travail de pièces de bois de grande taille, il est connu que la machine comporte un banc de support coulissant par rapport au bâti de la machine, augmentant ainsi localement la surface du plateau de support.

Un tel banc de guidage est déplaçable à coulissement par rapport à un rail de guidage solidaire du bâti de la machine.

Afin d'assurer un coulissement satisfaisant du banc de guidage par rapport au rail de guidage, un chariot intermédiaire équipé d'organes de roulement est monté déplaçable à coulissement entre le corps du banc de support et le rail de guidage.

Le chariot intermédiaire est équipé d'organes de roulement qui sont adaptés pour coopérer avec des voies de roulement intégrées au corps du banc de support et au rail de guidage.

Dans les machines outils connues, le rail de guidage est constitué d'un profilé extrudé en aluminium dont le contour en section définit, pour chaque voie de roulement, deux surfaces chanfreinées ménagées sur des parties du profilé mobiles deux à deux l'une par rapport à l'autre par déformation élastique du profilé. Pour chaque voie de roulement, plusieurs vis de réglage sont engagées entre les deux parties mobiles portant les surfaces chanfreinées délimitant la voie de roulement afin d'assurer un ajustement des positions relatives des paires de surfaces chanfreinées l'une par rapport à l'autre.

En effet, afin d'assurer un déplacement en translation satisfaisant du chariot et du banc de support, le rail de guidage nécessite un réglage préalable afin de compenser les tolérances de fabrication, notamment du chariot.

L'aluminium utilisé pour la fabrication du rail de guidage présente une faible rigidité en flexion, de sorte que la section du profilé doit être très grande, afin d'assurer une rigidité suffisante au rail de guidage.

Or, le coût de l'aluminium utilisé étant relativement élevé, le coût de fabrication du rail de guidage intégrant une grande quantité d'aluminium est élevé, grevant ainsi le coût total de la machine outil.

L'invention a pour but de proposer un rail de guidage permettant un guidage satisfaisant du banc de support monté déplaçable à coulissement par rapport à celui-ci, et dont le coût de fabrication est réduit.

A cet effet, l'invention a pour objet un rail de guidage pour un banc de support coulissant d'une machine outil du type précité, caractérisé en ce qu'il comporte deux profilés rigides délimitant chacun une voie de roulement, en ce que la structure porteuse comporte un ensemble de tôles métalliques mécano-soudées auxquelles sont soudés les deux profilés rigides, et en ce que le ou chaque tirant est engagé entre deux parties de la structure porteuse suivant un agencement adapté pour assurer un ajustement des positions relatives des deux profilés rigides l'un par rapport à l'autre.

Suivant des modes particuliers de réalisation, le rail de guidage comporte l'une ou plusieurs des caractéristiques suivantes :
- la structure porteuse comporte :
   . une embase allongée formant une première partie et de part et d'autre de laquelle sont solidarisées les deux profilés rigides ; et
   . une entretoise déformable élastiquement formant une deuxième partie, l'entretoise étant interposée entre les deux profilés rigides en assurant leur liaison,
      et le ou chaque tirant est engagé entre l'embase et l'entretoise ;
- l'entretoise comporte une tôle présentant, entre les deux profilés rigides, une surface principale bombée maintenue comprimée sous l'action du ou de chaque tirant ;
- l'embase comporte une cornière et des éléments de renfort mécano-soudés disposés au voisinage du ou de chaque tirant ;
- le ou chaque tirant comporte un boulon engagé au travers de trous ménagés dans la structure porteuse ; et
- chaque profil rigide présente une rainure formant ladite voie de roulement, laquelle rainure est délimitée par deux flancs latéraux d'écart constant et invariable.

L'invention a également pour objet une machine outil comportant un banc de support coulissant et un rail de guidage sur lequel est monté déplaçable le banc de support, le rail de guidage étant tel que défini ci-dessus.

L'invention sera mieux comprise à la lecture de la description qui va suivre, donnée uniquement à titre d'exemple, et faite en se référant aux dessins, sur lesquels :
- la figure 1 est une vue en perspective d'une machine outil incorporant un rail de guidage pour banc de support coulissant selon l'invention ;
- la figure 2 est une vue en perspective éclatée de l'ensemble formé du rail de guidage, du corps du banc de support coulissant et d'un chariot intermédiaire de la machine outil de la figure 1 ; et
- la figure 3 est une vue en section du rail de guidage selon l'invention et du banc de support coulissant représentés assemblés.

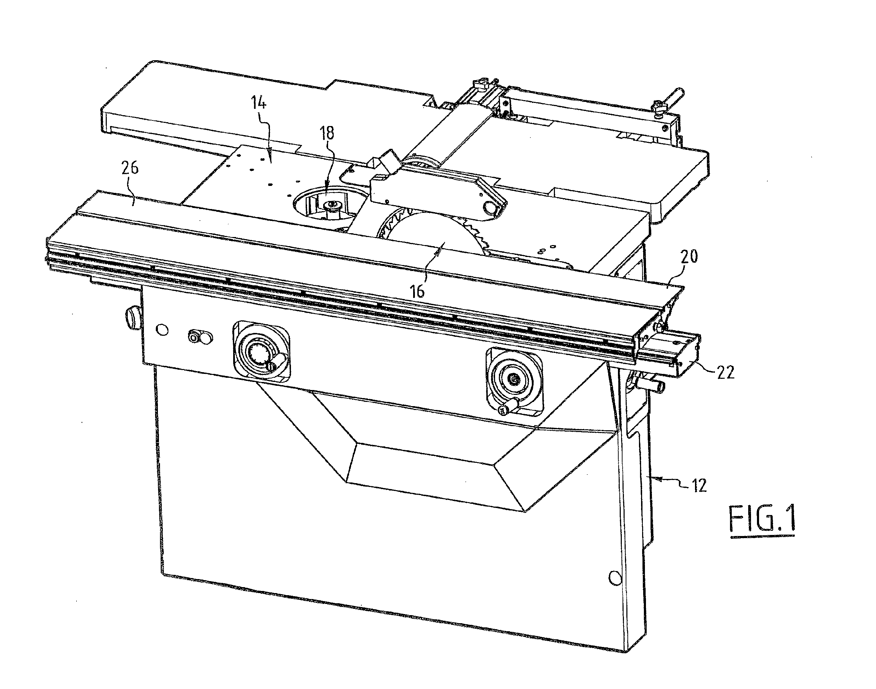

La machine outil 10 représentée sur la figure 1 est destinée au travail d'une pièce de bois. Elle comporte un bâti 12 à l'intérieur duquel est disposé un ensemble de groupes moto-réducteurs. La partie supérieure de la machine forme une surface de support 14 d'où émergent par exemple une lame de scie 16 et un arbre 18 d'entraînement d'outil de moulurage, toupillage ou mortaisage.

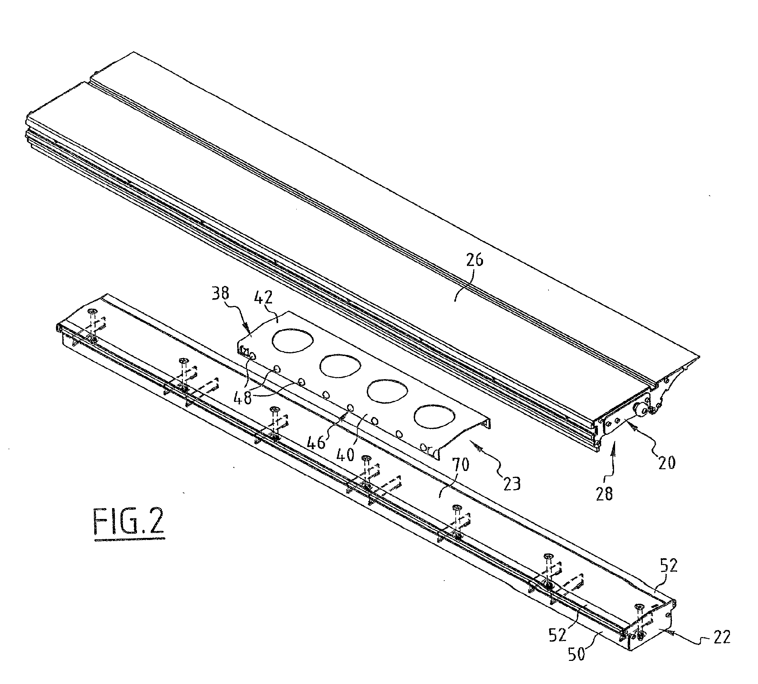

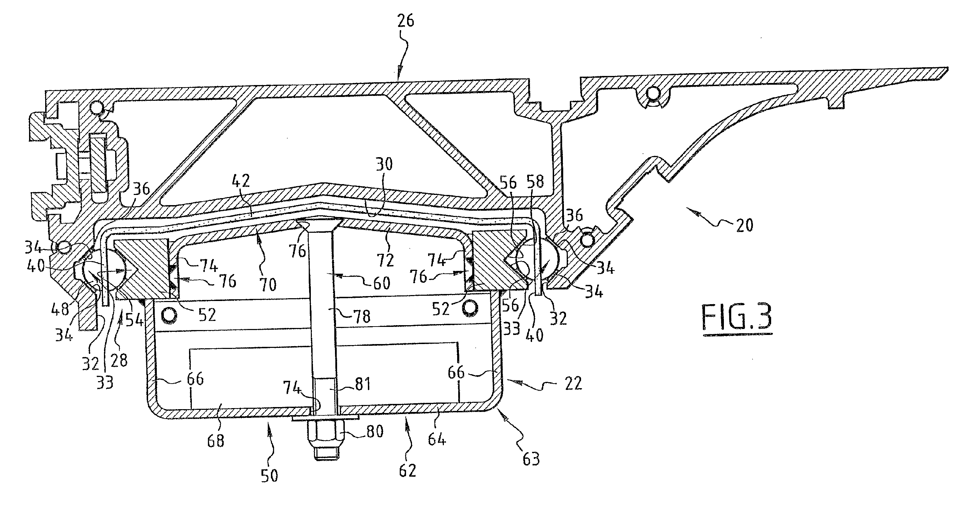

Comme connu en soi, la surface de support 14 est délimitée partiellement par un banc de support coulissant 20 monté déplaçable horizontalement à coulissement au-dessus d'un rail de guidage 22 selon l'invention. Un chariot intermédiaire 23, intégré au banc de support 20 et visible sur les figures 2 et 3, est interposé entre le rail de guidage 22 et le corps du banc de support coulissant 20.

Le rail de guidage 22 a une longueur sensiblement identique à celle du corps du banc de support 20. La longueur du chariot intermédiaire 23 est par exemple égale au quart de la longueur du rail de guidage et du corps du banc de support.

Le corps du banc de support 20 est formé par exemple d'un profilé extrudé en aluminium. Celui-ci présente une surface supérieure plane 26 adaptée pour le support de la pièce de bois à travailler.

Suivant toute sa longueur, le profilé délimite en outre, sur sa face opposée à la surface plane 26, un canal 28 s'ouvrant à l'opposé de la surface 26.

Ce canal 28 est destiné à recevoir le chariot coulissant 23 et la partie supérieure du rail de guidage 22.

Le canal 28 présente un fond 30 et deux flancs latéraux 32. Des gorges longitudinales 33 s'étendant en regard l'une de l'autre, parallèlement l'une à l'autre sont définies dans les flancs latéraux 32. Ces gorges 33 sont délimitées par deux surfaces 34 inclinées à 90° convergeant l'une vers l'autre vers le fond de chaque gorge 33. Ces surfaces inclinées 34 délimitent des voies de roulement pour des éléments de roulement du chariot 23. Elles sont équipées chacune d'un patin 36 favorisant le roulement.

Le chariot 23 comporte une cornière métallique 38 constituée d'une tôle présentant en section généralement la forme d'un U. La cornière 38 présente deux ailes latérales 40 parallèles l'une à l'autre reliées par un fond 42 partiellement évidé.

A intervalles réguliers, suivant la longueur du profilé 30, des ouvertures circulaires 46 sont ménagées dans les ailes 40. Ces ouvertures 46 constituent des cages de confinement d'éléments de roulement 48 du chariot. Ces éléments de roulement 48 sont formés par des billes adaptées pour s'appuyer sur les patins 36 des deux surfaces inclinées 34 de chacune des gorges 33.

Le rail de guidage 22 comporte une structure porteuse 50 à laquelle sont soudés, de part et d'autre, deux profilés rigides 52 sur lesquels sont délimités des voies de roulement 54 pour les billes 48 du chariot.

Plus précisément, les profilés rigides 52 sont formés par des barres de section générale carrée dont une face est entaillée sur toute la longueur par une rainure de forme générale triangulaire formant une voie de roulement 54. Cette rainure délimite deux flancs latéraux inclinés 56 s'étendant perpendiculairement l'un à l'autre. Leur écart et leur position sont constants sur toute la longueur du profilé et ne peuvent être ajustés. Chaque flanc 56 est muni d'un patin 58 de roulement pour les billes 48 du chariot 23.

Les profilés rigides 52 sont solidarisés l'un à l'autre par la structure porteuse 50 dans une position telle que les voies de roulement 54 soit disposées en regard des voies de roulement correspondantes ménagées dans le banc de support 20.

La structure porteuse 50 est formée d'un ensemble de plaques métalliques mécano-soudées auxquelles sont soudés les deux profilés rigides 52.

Elle comporte en outre un ensemble de tirants de réglage 60 dont l'agencement sera décrit en détail dans la suite.

La structure porteuse 50 comporte une embase 62. Celle-ci est constituée d'une cornière 63 en U adaptée pour être solidarisée au bâti 12 de la machine.

La cornière est formée d'une tôle repliée. Elle présente un fond 64 et deux ailes latérales 66 s'étendant parallèlement l'une à l'autre. Des plaques de rigidification 68 sont soudées transversalement à intervalles réguliers sur la surface du fond 64 de l'embase. Ces plaques 68 s'étendent entre les deux ailes 66.

Les deux profilés rigides 52 sont soudés en appui sur les bords supérieurs des ailes 66.

En outre, les deux profilés 52 et plus précisément les faces de ces profilés opposées aux voies de roulement 54 sont reliées l'une à l'autre par une entretoise 70 constituée d'une tôle métallique flexible. L'entretoise 70 s'étend en regard du fond 64 de l'embase 62, suivant toute la longueur du rail de guidage.

Elle est conformée pour constituer une cornière présentant une forme générale de U. Elle comporte un fond bombé 72 et de deux ailes latérales 74 le long de la surface extérieure desquelles sont soudés les profilés rigides 52. A cet effet, les ailes 74 comportent des lumières 76 au travers desquelles sont réalisées des soudures de liaison des profilés 52 à l'entretoise 70.

Le fond 72 de la cornière est généralement bombé vers l'extérieur du rail de guidage. Ainsi, la partie médiane du fond 72 est plus écartée de l'embase 62 que les parties latérales du fond.

A intervalles réguliers, suivant la longueur du rail de guidage, des trous coaxiaux 74, 76 sont ménagés respectivement dans les fonds 64 et 72 de l'embase 62 et de l'entretoise 70 de liaison.

Les tirants 60 sont engagés au travers de ces trous coaxiaux. Les tirants comportent des boulons constitués d'une vis 78 et d'un écrou 80 de type Nylstop.

Plus précisément, la tête de vis est appliquée contre le fond 72 de la cornière déformable 70 sur un bord chanfreiné du trou 76, alors que l'extrémité taraudée 81 de la vis 78 est engagée au travers de l'orifice ménagé dans le fond de l'embase. Extérieurement, l'écrou 80 est engagé sur l'extrémité taraudée de la vis. Il s'appuie sur la surface extérieure du fond 64.

On conçoit que le serrage ou le desserrage des boulons constitués des vis 78 et des écrous 80 assure une modification de l'écart entre la partie médiane du fond bombé 72 et l'embase 62 du rail de guidage. Cette variation de l'écart résulte de la déformation élastique du fond bombé 72 sous l'action des tirants. L'embase 62 présente avantageusement une rigidité supérieure au fond 72, de sorte que les tirants 60 agissent sur l'entretoise 70 pour en assurer la déformation et non sur l'embase 62 servant seulement de contre-réaction.

Du fait du bombement du fond 72, le serrage de la vis 78 conduit à un écartement local des deux profilés rigides 52 l'un par rapport à l'autre.

On conçoit que, par action sur les vis 78 réparties suivant toute la longueur du rail de guidage, l'écartement entre les deux voies de roulement 54 ménagées par les profilés 52 peut être ajusté, afin d'assurer un maintien correct des billes 48 entre les deux paires de voies de roulement ménagées en vis-à-vis dans le rail de guidage et dans le banc de support.

Le rail de guidage étant réalisé dans des plaques métalliques mécano-soudées, le coût de fabrication du rail de guidage est très inférieur à un rail réalisé en aluminium. La rigidité des plaques métalliques d'acier étant très supérieure à celle de l'aluminium, une quantité plus réduite de matériau peut être utilisée, réduisant ainsi le coût du rail de guidage, notamment du fait du prix inférieur, pour une même masse, de l'acier par rapport à l'aluminium.

## Revendications

1. Rail de guidage (22) pour banc de support (20) coulissant d'une machine outil (10), comportant
- une structure porteuse (50) déformable comportant au moins deux parties (62, 70) dont les positions relatives sont ajustables ;
- deux voies de roulement (54) pour des organes de roulement (48) du banc de support coulissant (20);
- au moins un tirant engagé entre deux parties (62, 70) de la structure porteuse pour l'ajustement de leurs positions relatives,
**caractérisé en ce qu'**il comporte deux profilés rigides (52) délimitant chacun une voie de roulement (54), **en ce que** la structure porteuse (50) comporte un ensemble de tôles métalliques mécano-soudées auxquelles sont soudés les deux profilés rigides (52), et **en ce que** le ou chaque tirant (60) est engagé entre deux parties (62, 70) de la structure porteuse suivant un agencement adapté pour assurer un ajustement des positions relatives des deux profilés rigides (52) l'un par rapport à l'autre.

2. Rail de guidage (22) selon la revendication 1, **caractérisé en ce que** la structure porteuse (50) comporte
- une embase (62) allongée formant une première partie et de part et d'autre de laquelle sont solidarisées les deux profilés rigides (52) ; et
- une entretoise (70) déformable élastiquement formant une deuxième partie, l'entretoise étant interposée entre les deux profilés rigides en assurant leur liaison,
et **en ce que** le ou chaque tirant (60) est engagé entre l'embase (62) et l'entretoise (70).

3. Rail de guidage (22) selon la revendication 2, **caractérisé en ce que** l'entretoise (70) comporte une tôle présentant, entre les deux profilés rigides (52), une surface principale bombée (72) maintenue comprimée sous l'action du ou de chaque tirant (60).

4. Rail de guidage (22) selon la revendication 2 ou 3, **caractérisé en ce que** l'embase (62) comporte une cornière (63) et des éléments de renfort (68) mécano-soudés disposés au voisinage du ou de chaque tirant (60).

5. Rail de guidage selon l'une quelconque des revendications précédentes, **caractérisé en ce que** le ou chaque tirant comporte un boulon (60) engagé au travers de trous (74, 76) ménagés dans la structure porteuse (50).

6. Rail de guidage selon l'une quelconque des revendications précédentes, **caractérisé en ce que** chaque profil rigide (52) présente une rainure formant ladite voie de roulement (54), laquelle rainure est délimitée par deux flancs latéraux (56) d'écart constant et invariable.

7. Dispositif de support pour une machine outil (10) comportant un banc de support mobile (20) et un rail de guidage (22), le long duquel le banc de support (20) est monté coulissant, **caractérisé en ce que** le rail de guidage (22) est un rail de guidage selon l'une quelconque des revendications précédentes.

8. Machine outil adaptée pour le traitement d'une pièce de bois, **caractérisée en ce qu'**elle comporte un dispositif de support selon la revendication 7.
